# EUROPÄISCHE PATENTANMELDUNG

(11) **EP 4 327 640 A1**
(43) Veröffentlichungstag der Anmeldung: **28.02.2024**
(21) Anmeldenummer: 23179431.4
(22) Anmeldetag: 15.06.2023
(51) Int. Cl.: A01B 76/00, A01D 41/127, G05B 23/00, G06Q 10/20, A01B 71/02

(54) **STEUERUNGSSYSTEM FÜR EINE LANDWIRTSCHAFTLICHE ARBEITSMASCHINE**

(30) Priorität: 23.08.2022 DE 102022121269
(71) Anmelder: CLAAS E-Systems GmbH, 49201 Dissen (DE)
(72) Erfinder: Töniges, Torben, 33602 Bielefeld (DE); Redenius, Jannik, 32361 Pr. Oldendorf (DE); Bone, Sven, 49124 Georgsmarienhütte (DE); Lücke, Andreas, 33184 Altenbeken (DE); Korthals, Timo, 33818 Leopoldshöhe (DE); Skiba, Andreas, 33647 Bielefeld (DE)
(74) Vertreter: CLAAS Gruppe

(57) **Zusammenfassung**

Ein Steuerungssystem (13) für eine landwirtschaftliche Arbeitsmaschine (1) hat wenigstens einen Dateneingang (14) zum Empfangen eines für einen aktuellen Betriebszustand der Arbeitsmaschine (1) charakteristischen aktuellen Satzes von Betriebsgrößen der Arbeitsmaschine (1) und einen Steuerausgang (14) zum Ausgeben eines die Arbeit der Arbeitsmaschine (1) beeinflussenden Steuerbefehls. Das Steuerungssystem (13) verfügt über ein anhand von Trainingsdaten erlerntes Modell (24) des Normalzustandes der Arbeitsmaschine und ist eingerichtet, einen aktuellen anomalen Zustand der Arbeitsmaschine (1) durch Abgleichen des aktuellen Satzes von Betriebsgrößen mit dem Modell (24) zu erkennen und darauf durch Ausgeben des Steuerbefehls zu reagieren.

## Beschreibung

Die vorliegende Erfindung betrifft ein Steuerungssystem für eine landwirtschaftliche Arbeitsmaschine, das in der Lage ist, Teile der im Rahmen eines Arbeitseinsatzes herkömmlicherweise von einem Fahrer der Maschine erledigte Aufgaben zu übernehmen, so dass dieser den für ihn verbleibenden Aufgaben ein höheres Maß an Aufmerksamkeit widmen kann, oder ihn - zumindest zeitweilig - komplett zu ersetzen und einen unbemannten Betrieb der Arbeitsmaschine zu ermöglichen.

Zu den von einem solchen Steuerungssystem übernommenen Aufgaben können etwa das Navigieren der Arbeitsmaschine auf einem Feld, das Optimieren des Betriebs einzelner Funktionsaggregate der Arbeitsmaschine wie etwa das Optimieren des Dreschwerks und/oder der Reinigungsstufe eines Mähdreschers zur Anpassung an im Laufe eines Ernteansatzes örtlich schwankender Massenströme des Ernteguts, das Überwachen des Vorfelds der Arbeitsmaschine auf eventuelle Gefahren und vieles mehr gehören.

Steuerungsaufgaben, bei denen ein aktueller Sollwert einer Betriebsgröße der Arbeitsmaschine anhand von Messwerten anderer Betriebsgrößen oder von in der Vergangenheit gemessenen Werten derselben Betriebsgröße unter Verwendung eines von einem Entwickler im Detail festgelegten Algorithmus errechnet oder in einer Tabelle nachgeschlagen wird, sind mit Hilfe von moderner, leistungsfähiger Mikroelektronik zumeist unproblematisch automatisierbar. So werden etwa für die Steuerung eines Dreschwerks typischerweise nur eine kleine Zahl n von gemessenen Betriebsgrößen benötigt, die jeweils nur Werte innerhalb eines begrenzten Intervalls annehmen können, und es genügt, für jede am Dreschwerk einzustellende Betriebsgröße - in Form einer Nachschlagetabelle oder einer Rechenvorschrift - festzulegen, welchen Wert diese Betriebsgröße bei einer gegebenen Kombination von Werten der gemessenen Betriebsgrößen haben soll. Der mit einem solchen Lösungsansatz verbundene Entwicklungsaufwand steigt jedoch exponentiell mit der Zahl der zu messenden Betriebsgrößen. Spätestens wenn die zu messenden Betriebsgrößen ein Bild umfassen, Helligkeit und gegebenenfalls Farbwerte jedes einzelnen Pixels des Bildes also eine zu messende Betriebsgröße darstellen, stößt ein solcher Ansatz an seine Grenzen.

EP 3 104 244 B1 beschreibt eine Steuerung einer landwirtschaftlichen Arbeitsmaschine, die eingerichtet ist, eine Vielzahl von Betriebsgrößen zu überwachen, um anhand der Überwachungsergebnisse eine eventuelle Anomalie zu erkennen und eine mit dieser Anomalie verbundene Gefährdung insbesondere durch einen Nothalt der Maschine abzuwenden. Die Erkennung einer Anomalie basiert auf der Prüfung, ob eine gemessene Betriebsgröße in einem normalen Bereich liegt oder nicht. Was der normale Bereich ist, bedarf der Festlegung durch einen Entwickler oder Anwender der Arbeitsmaschine. Anomalien, die nicht vorab bekannt und in die Festlegung des normalen Bereichs eingeflossen sind, können nicht erkannt und folglich auch nicht abgefangen werden.

Zum Erkennen von Anomalien, insbesondere in Kamerabildern, erfreuen sich KI-Anwendungen wie etwa neuronale Netze großer Beliebtheit. Ein wesentlicher Vorteil der neuronalen Netze liegt darin, dass zum Erkennen einer Anomalie kein Algorithmus explizit formuliert werden muss, sondern dass ein neuronales Netz mit Hilfe von Datensätzen, von denen bekannt ist, ob sie einem normalen Betriebszustand oder einer Anomalie entsprechen, trainiert werden kann (sogenanntes überwachtes Lernen), den normalen Betriebszustand von der Anomalie zu unterscheiden.

Damit allerdings ein solches neuronales Netz trainiert werden kann, müssen Trainingsdatensätze vorliegen, von denen bekannt ist, ob sie einen normalen Betriebszustand oder eine Anomalie zeigen, denn nur so kann überprüft werden, ob die von dem neuronalen Netz getroffene Unterscheidung zutrifft oder nicht, und kann die Verschaltung der Neuronen des neuronalen Netzes untereinander so verändert werden dass die Zuverlässigkeit der Unterscheidung besser wird. Damit eine Entscheidung zwischen normal und anomal getroffen werden kann, müssen folglich Trainingsdatensätze vorliegen, für die bereits bekannt ist, ob sie normal oder anomal sind. Um die zum Treffen einer solchen Entscheidung benötigten Trainingsdaten bereitstellen zu können, muss die Art der Anomalie bekannt sein, und sie muss entweder bereits aufgetreten sein, und bei diesem Auftreten müssen Trainingsdaten erhoben worden sein, oder die Anomalie muss so genau verstanden sein, dass Trainingsdaten per Simulation erzeugt werden können. Der Anwender hat daher nie Gewissheit, dass ein solches System in der Lage ist, alle möglichen Anomalien zu detektieren; im Gegenteil ist davon auszugehen, dass eine unvorhergesehene Anomalie, auf die das Netzwerk nicht trainiert werden konnte, nicht erkannt werden wird.

Es besteht daher Bedarf nach einem Steuerungssystem für eine landwirtschaftliche Arbeitsmaschine, das in der Lage ist, auch unvorhergesehene Anomalien als solche zu erkennen und eine angemessene Reaktion auf eine solche Anomalie zu ermöglichen.

Die Aufgabe wird erfindungsgemäß gelöst durch ein Steuerungssystem für eine landwirtschaftliche Arbeitsmaschine mit wenigstens einem Dateneingang zum Empfangen eines für einen aktuellen Betriebszustand der Arbeitsmaschine charakteristischen aktuellen Satzes von Betriebsgrößen der Arbeitsmaschine und einem Steuerausgang zum Ausgeben eines die Arbeit der Arbeitsmaschine beeinflussenden Steuerbefehls, dadurch gekennzeichnet, dass das Steuerungssystem über ein anhand von Trainingsdaten erlerntes Modell des Normalzustandes der Arbeitsmaschine verfügt und eingerichtet ist, einen aktuellen anomalen Zustand der Arbeitsmaschine durch Abgleichen des aktuellen Satzes von Betriebsgrößen mit dem Modell zu erkennen und darauf durch Ausgeben des Steuerbefehls zu reagieren.

Das erfindungsgemäße System ist also nicht darauf ausgelegt, einen zuvor erlernten anomalen Zustand wiederzuerkennen, sondern lediglich, den Normalzustand zu erkennen und einen anomalen Zustand immer dann zu erkennen, wenn der aktuelle Satz von Betriebsgrößen sich von einem für den Normalzustand erwarteten unterscheidet.

Es gibt verschiedene Ansätze, einen Zustand auch dann als anomal zu erkennen, wenn er nicht mit einer bekannten Anomalie verglichen und eine Ähnlichkeit zu dieser festgestellt werden kann. Wenn die Zahl der erfassten Betriebsgrößen der Arbeitsmaschine n ist, kann man den Betriebszustand der Arbeitsmaschine als einen Vektor auffassen, dessen n Komponenten jeweils die Messwerte der erfassten Betriebsgrößen sind, und die Menge der möglichen Betriebszustände ist ein Volumen in dem von den erfassten Betriebsgrößen aufgespannten n-dimensionalen Vektorraums. Die Menge der normalen Betriebszustände ist wiederum ein kleiner Teil des besagten Volumens, in das der bei weitem überwiegende Teil der an der Maschine gemessenen Betriebszustände fällt. Ein Betriebszustand, in dessen engerer Umgebung eine große Zahl weiterer gemessener Betriebszustände liegt, kann daher als Normalzustand beurteilt werden; ein Betriebszustand, in dessen Umgebung keine anderen Betriebszustände oder nur eine kleine Zahl von weiteren Betriebszuständen gemessen wurde, dürfte hingegen eine Anomalie darstellen.

Wenn der Satz von Betriebsgrößen Bilddaten umfasst, macht die hohe Zahl von Dimensionen des Vektorraums eine große Menge an Trainingsdaten notwendig. Bevorzugt ist daher, einen aus der Bildverarbeitung als Autoencoder bezeichneten Ansatz auf den Betriebszustand der Arbeitsmaschine zu übertragen, indem ein Encoder zum Konvertieren eines aktuellen Satzes in eine komprimierte Darstellung und ein Decoder zum Dekomprimieren der komprimierten Darstellung in einen wiederhergestellten Satz bereitgestellt werden, wobei der Encoder und der Decoder jeweils lernfähig sind, um die Abweichung zwischen jedem aktuellen Satz und dem daraus erhaltenen wiederhergestellten Satz zu minimieren. Um die Abweichung mit einem Schwellenwert vergleichen zu können, muss eine geeignete Metrik definiert sein. Die Kompression bewirkt im Idealfall - nach erfolgreichem Lernen - dass aus dem aktuellen Datensatz nur diejenigen Informationen übrigbleiben, die es erlauben, einen häufig auftretenden und infolgedessen normalen Betriebszustand nach Dekompression mit ausreichender Genauigkeit wiederherzustellen. Für einen anomalen, seltenen Betriebszustand hingegen bestand wenig oder keine Gelegenheit, ein Paar von Kompression und Dekompression zu erlernen, die eine genaue Wiederherstellung erlauben, so dass für einen solchen Betriebszustand mit einer hohen Abweichung zwischen dem aktuellen und dem wiederhergestellten Satz von Betriebsgrößen zu rechnen ist. Da diese hohe Abweichung allein aus der Seltenheit des anomalen Zustands resultiert, ist es nicht notwendig, dass das Steuerungssystem für den anomalen Zustand charakteristische Merkmale vorab erlernt bzw. abprüft; im Gegenteil garantiert der Mangel an Gelegenheit, den anomalen Zustand vorab kennenzulernen, dessen Erkennung, wenn er denn tatsächlich einmal auftritt.

Encoder und Decoder können jeweils durch neuronale Netze oder - da die komprimierte Darstellung nur als Zwischenergebnis benötigt wird, als aufeinanderfolgende Schichten eines gleichen neuronalen Netzes aufgebaut sein.

Um die Datenkompression zu erzwingen, kann die Zahl der Neuronen an einer Übergangsschicht zwischen Encoder und Decoder kleiner sein als an einer Eingangsschicht des Encoders bzw. einer Ausgangsschicht des Decoders.

Das Modell kann, typischerweise vom Hersteller, anhand einer vorgegeben Menge von Trainingsdaten offline trainiert sein, um bei erstmaligem Gebrauch durch einen Anwender sofort brauchbare Ergebnisse liefern zu können.

Um allerdings eine hohe Trennschärfe, ggf, auch unter Berücksichtigung von für den Anwender spezifischen Einsatzbedingungen zu erzielen, sollte das Modell anhand von im Betrieb der Arbeitsmaschine gewonnenen aktuellen Sätzen von Betriebsgrößen trainiert sein; d.h. das Steuerungssystem sollte eingerichtet sein, das Modell anhand von im Betrieb gewonnenen Sätzen von Betriebsgrößen fortlaufend zu trainieren.

Vorteilhafterweise kann das Training unbeaufsichtigt erfolgen, d.h. ohne dass dem Steuerungssystem zu einem Satz von Betriebsgrößen eine Information darüber zur Verfügung gestellt wird, ob dieser Satz normal oder anomal ist. Dies reduziert erheblich den Arbeitsaufwand für die Gewinnung der Trainingsdaten, insbesondere können sämtliche im Betrieb der Arbeitsmaschine erfassten Sätze als Trainingsdaten genutzt werden, ohne dass dies mit Aufwand für den Benutzer verbunden wäre.

Das erfindungsgemäße Steuerungssystem ist hinsichtlich der Art der verarbeiteten Betriebsgrößen nicht festgelegt. Ein aktueller Satz von Betriebsgrößen kann insbesondere ein oder mehrere der folgenden umfassen:
- ein von einer Kamera der Arbeitsmaschine aufgenommenes Bild der Umgebung der Arbeitsmaschine, wobei die Kamera insbesondere auf eine vor der Arbeitsmaschine liegende Fläche gerichtet sein kann, um Werkzeug der Arbeitsmaschine auf die Eigenschaften dieser Fläche einzustellen, oder auf eine hinter der Arbeitsmaschine liegende Fläche gerichtet sein kann, um die Ergebnisse der Bearbeitung zu erfassen und Einstellungen des Werkzeugs anhand dieser Ergebnisse zu optimieren;
- ein von einer Kamera der Arbeitsmaschine aufgenommenes Bild eines Teils der Arbeitsmaschine, insbesondere eines in der Arbeitsmaschine verarbeiteten Gutstroms,
- eine Aufzeichnung eines Betriebsgeräuschs der Arbeitsmaschine, um daraus Aufschluss über den Betriebszustand der Arbeitsmaschine oder Eigenschaften des Gutstroms zu gewinnen;
- eine geographische Position der Arbeitsmaschine, zur Verwendung beim autonomen Navigieren;
- eine Position eines Stellgliedes der Arbeitsmaschine,
- eine Geschwindigkeit eines Motors oder eines von dem Motor angetriebenen Elements der Arbeitsmaschine,
- eine Ableitung, insbesondere nach der Zeit, einer der vorgenannten Betriebsgrößen.

Der bei Erkennung eines anomalen Zustand ausgegebene Steuerbefehl kann im einfachsten Fall ein Haltebefehl zum Anhalten der Arbeitsmaschine oder wenigstens einer von der Anomalie betroffenen Baugruppe der Arbeitsmaschine sein. Es kann sich aber auch um einen Befehl handeln, der, vorzugsweise ohne den Betrieb der Maschine zu unterbrechen, auf eine Beendigung des anomalen Zustands abzielt.

Gegenstand der Erfindung ist ferner eine landwirtschaftliche Arbeitsmaschine wie etwa ein Traktor, ein Mähdrescher, ein Feldhäcksler oder dergleichen, die mit einem Steuerungssystem wie oben beschrieben ausgestattet ist.

Ein weiterer Erfindungsgegenstand ist ein Computerprogramm-Produkt mit Programmcode-Mitteln, die bei Ausführung auf einem Computer diesen befähigen, als Steuerungssystem wie oben beschrieben zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Mähdrescher als Beispiel einer landwirtschaftlichen Arbeitsmaschine gemäß der Erfindung; und
- Fig. 2: ein Blockdiagramm eines Steuerungsystems.

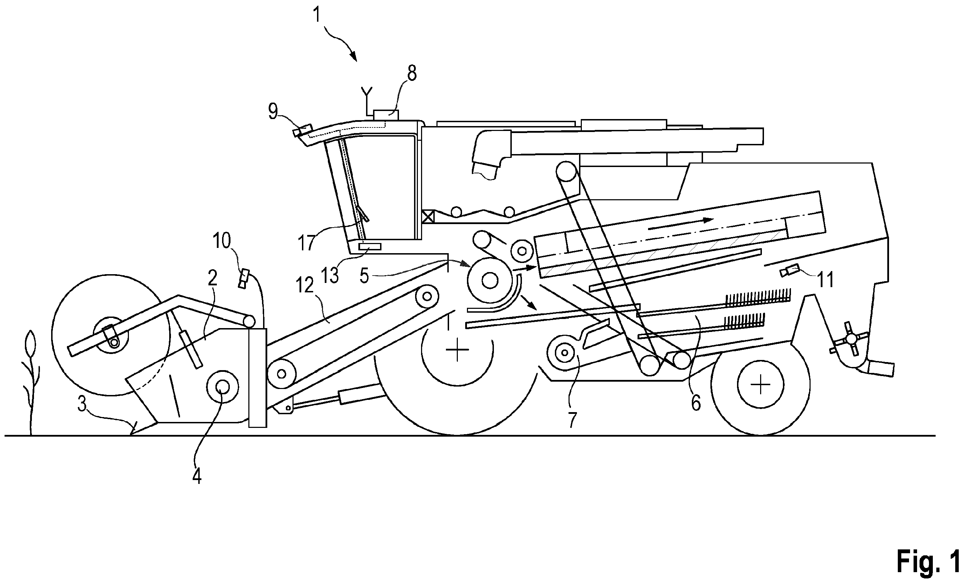

In Fig. 1 ist als Beispiel einer landwirtschaftlichen Arbeitsmaschine ein Mähdrescher 1 schematisch dargestellt. Zu den von dem Mähdrescher 1 mit Unterstützung eines Fahrers oder auch autonom zu bewältigenden Aufgaben gehört
- das Navigieren auf einem Feld, d.h. das Festlegen und Verfolgen einer Route, die es erlaubt, die gesamte Feldfläche in kurzer Zeit zu bearbeiten,
- das Erkennen von Hindernissen oder Gefahrenquellen, die dem Verfolgen der geplanten Route entgegenstehen, und das Finden einer angemessenen Reaktion auf eine solche Erkennung;
- das Steuern von Arbeitswerkzeugen wie etwa der Stellung eines Erntevorsatzes 2 relativ zum Boden so, dass einerseits das Erntegut möglichst vollständig aufgenommen, Bodenkontakt einer Messerleiste 3 oder die Aufnahme von Fremdkörpern durch den Erntevorsatz 2 vermieden wird, der Geschwindigkeit einer Förderschnecke 4 entsprechend dem Massenstrom des aufgenommenen Ernteguts, von Spaltbreiten und Drehzahlen eines Dreschwerks 5 sowie der Bewegungsintensität von Hordenschüttlern 6 und der Drehzahl eines Gebläses 7 in einer Abscheidestufe mit dem Ziel, das Korn von Nichtkornanteilen des Ernteguts möglichst sauber und vollständig abzutrennen.

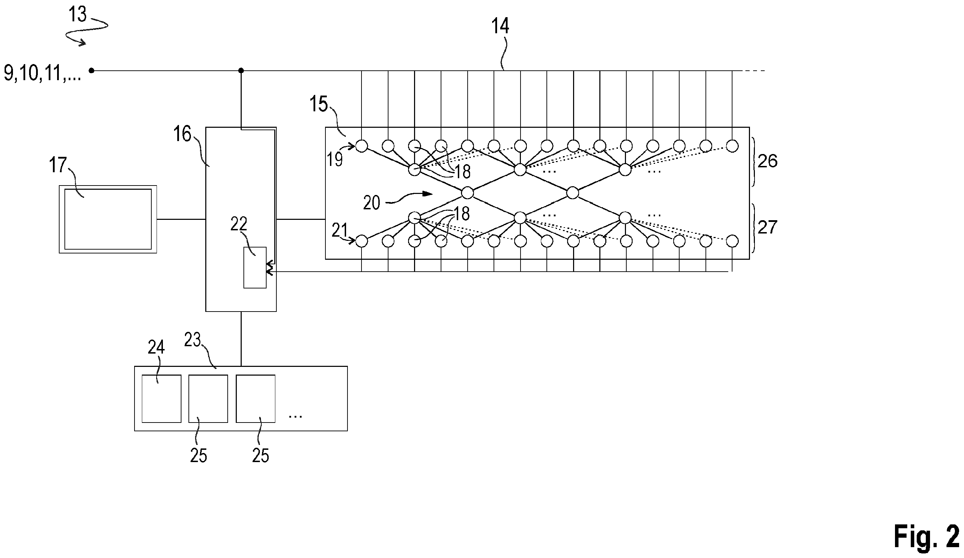

Das Steuerungssystem der Fig. 2 kann eingesetzt werden, um dem Fahrer eine oder mehrere dieser Aufgaben abzunehmen; es kann eine Benutzerschnittstelle vorgesehen sein, an der der Fahrer die von dem Steuerungssystem zu übernehmende Aufgabe auswählen kann.

Sensoren zum Erfassen von für diese Steuerungsaufgaben benötigten Messwerten von Betriebsgrößen sind an sich bekannt und brauchen daher nicht im Detail beschrieben zu werden. Diese Sensoren umfassen z.B. ein Satellitennavigationssystem 8 zum Erfassen der aktuellen geographischen Position des Mähdreschers 1 anhand eines Satellitensignals; eine auf das Feld vor dem Mähdrescher 1 gerichtete Kamera 9, evtl. weitere Kameras 10, 11 zum Überwachen des Erntegutstroms entlang der Förderschnecke 4 im Erntevorsatz 2, im Dreschwerk 5 oder an anderer geeigneter Stelle, (nicht dargestellte) Drehzahlsensoren an der Förderschnecke 4, einem Schrägförderer 12 zwischen dem Erntevorsatz 2 und dem Dreschwerk 5, an Trommeln des Dreschwerks 5 oder am Gebläse 7, Positionssensoren zum Überwachen der Stellung des Erntevorsatzes 2 oder der Spaltbreiten des Dreschwerks 5, einen akustischen Sensor, der an einem Verteiler für ausgedroschenes Stroh am Heck des Mähdreschers vorgesehen ist, um einen Restkorngehalt des Strohs anhand eines von den Körnern verursachten Prasselgeräuschs zu beurteilen, und viele mehr. Ein Steuerungssystem 13 empfängt Messdaten von den diversen Sensoren, um anhand von diesen diverse Stellglieder des Mähdreschers 1 anzusteuern.

Während das Satellitennavigationssystem 8 zweidimensionale Messwerte an das Steuerungssystem 13 liefert und die Positions- und Drehzahlsensoren jeweils eindimensionale, sind die Daten der Kameras 3, 10, 11 hochdimensional, da bei jedem einzelnen Pixel ihrer Bilder der Helligkeitswert (oder, im Falle einer Farbkamera, Helligkeitswerte der einzelnen Grundfarben) jeweils einen unabhängigen Messwert darstellen. Dennoch können alle diese Messwerte im Steuerungssystem 13 einheitlich behandelt werden.

Fig. 2 zeigt ein Blockdiagramm des Steuerungssystems 13. Eingänge für vom dem Steuerungssystem 13 zu verarbeitende Messwerte können durch einen Datenbus 14 gebildet, sein, an den die oben erwähnten Sensoren angeschlossen sind. Derselbe Datenbus 14 kann auch als ein Ausgang fungieren, über den das Steuerungssystem 13 je nach vom Fahrer dem Steuerungssystem zugewiesener Aufgabe Steuerbefehle an Funktionsgruppen des Mähdreschers wie etwa Lenkung, Dreschwerk etc. ausgibt.

Ebenfalls an den Datenbus 14 angeschlossen sind ein neuronales Netzwerk 15, typischerweise vom Typ Convolutional Neural Network, und eine Verwaltungseinheit 16. Beide können auf einem gleichen Mikroprozessor oder anderem Typ von Computer, z.B. im Zeitmultiplex, implementiert sein. Die Verwaltungseinheit 16 ist eingerichtet, um über eine Benutzerschnittstelle 17, z.B. einen in der Fahrerkabine angebrachten Touchscreen, in Erfahrung zu bringen, welche Aufgabe der Fahrer ggf. an das Steuerungssystem delegieren möchte, die Neuronenzahl des Netzes 15 passend für die Aufgabe festzulegen und einen der Aufgabe zugeordneten Satz 24 von Parametern der einzelnen Neuronen des Netzes 15 aus einem Speicher 23 in die jeweils zugeordneten Neuronen 18 des Netzes 15 zu laden. Der Parametersatz 24 stellt ein Modell des Normalzustandes der Arbeitsmaschine dar, indem er es wie nachfolgend beschrieben ermöglicht zu beurteilen, ob ein aktueller Zustand der Arbeitsmaschine normal oder anomal ist.

Wenn einer der Sensoren, die für die gewählte Aufgabe benötigt werden, eine Kamera 9, 10, 11 ist, dann ist in einer Eingangsschicht 19 des Netzes 15 jedem Pixel (oder jedem Helligkeitswert eines jeden Pixels) ein Neuron 18 zugeordnet, um den betreffenden Helligkeitswert zu empfangen. Weitere Neuronen der Eingangsschicht 19 sind vorgesehen, um Messwerte anderer für die gewählte Aufgabe benötigter Sensoren, im Fall, dass die ausgewählte Aufgabe das Navigieren ist, also mindestens von dem Satellitennavigationssystem 8 zu empfangen.

Im Laufe einer oder mehrerer auf die Eingangsschicht 19 folgender Schichten des Netzes 15 nimmt die Zahl der Neuronen ab und erreicht ein Minimum in einer Zwischenschicht 20. Während also an den Neuronen 18 der Eingangsschicht 19 die vollständigen Messdaten von allen für die gewählte Aufgabe benötigten Sensoren mit voller Auflösung anliegen, ist dies in der Zwischenschicht 20 gar nicht mehr möglich. Die an den Neuronen der Zwischenschicht 20 anliegenden Signale können folglich die ursprünglichen Messdaten gar nicht in allem Detail wiedergeben; im Idealfall sollten die stromaufwärtigen Schichten des Netzes 15 so trainiert (d.h. der Parametersatz 24 so optimiert) sein, dass die Daten, die die Zwischenschicht 20 erreichen, nur die signifikanten Details aus den ursprünglichen Messwerten enthalten, d.h. diejenigen Informationen, die es den stromabwärtigen Schichten des Netzes 15 erlauben, Ausgabedaten zu ermitteln, die sich normalerweise nicht wesentlich von den ursprünglichen Messdaten unterscheiden, und diese an den Ausgängen einer Ausgangsschicht 21 bereitzustellen. Die Schichten des Netzes 15, die in Flussrichtung der Verarbeitung stromaufwärts von der Zwischenschicht 20 liegen, bilden so einen Encoder 26, der den von den Sensoren gelieferten ursprünglichen Messdatensatz komprimiert; die Schichten stromabwärts der Zwischenschicht 20 fungieren als Decoder 27, der den Datensatz möglichst originalgetreu wiederherstellt.

Die Verwaltungseinheit 16 empfängt sowohl die ursprünglichen Messdaten vom Bus 14 als auch die nach Kompression wiederhergestellten Messdaten von der Ausgabeschicht 21 und beurteilt deren Abweichung voneinander anhand einer vorgegebenen Metrik 22, d.h. sie berechnet einen Zahlenwert, der ein Maß für den Grad der Abweichung zwischen dem ursprünglichen und den wiederhergestellten Messdaten ist.

Da der von dem Netz 15 aktuell verwendete Parametersatz 24 darauf trainiert ist, die Messdaten möglichst originalgetreu wiederherzustellen, kann davon ausgegangen werden, dass diese Wiederherstellung bei "normalen" Messdaten, die einen Betriebszustand des Mähdreschers 1 repräsentieren, wie er identisch oder ähnlich bereits früher aufgetreten ist, eine befriedigend kleine Abweichung liefern wird, da Gelegenheit bestanden hat, den Parametersatz 24 für die Wiederherstellung dieses Zustandes zu optimieren. Wenn die ursprünglichen Messdaten hingegen einen anomalen Zustand repräsentieren, dann ist aufgrund von dessen Seltenheit die Wahrscheinlichkeit hoch, dass das Netzwerk 15 noch nie oder allenfalls selten mit diesem Zustand konfrontiert gewesen ist und deswegen bei Weitem weniger Gelegenheit bestanden hat, die Wiederherstellung der anomalen Messdaten zu trainieren. Der anomale Zustand ist daher an einer hohen Abweichung zwischen ursprünglichen und wiederhergestellten Messdaten erkennbar.

Aus dem Grad der Abweichung zwischen ursprünglichen und wiederhergestellten Messdaten ist nur das Vorliegen einer Anomalie erkennbar, nicht aber eine Ursache der Anomalie. Daher sind die Maßnahmen zur Abwendung einer möglichen Gefahr, die die Verwaltungseinheit allein basierend auf der Erkennung einer Anomalie treffen kann, wenig spezifisch und beschränken sich typischerweise auf einen Nothalt. Z.B. kann die Fortbewegung des Mähdreschers 1 gestoppt werden, wenn eine Anomalie in einem von der Kamera 9 aufgenommenen Bild erkannt wird, oder es können die Fortbewegung und die Bewegung der Förderschnecke 4 gestoppt werden, wenn die Kamera 10 eine Anomalie im Erntegut im Erntevorsatz 2 erfasst.

Um spezifischere Maßnahmen zur Gefahrenabwendung treffen oder entscheiden zu können, ob solche überhaupt notwendig sind, ist es erforderlich, die festgestellte Anomalie als einer bestimmten Klasse zugehörig zu erkennen. Wenn dies gelingt, dann können anschließend jeweils bekannte, für die erkannte Klasse zweckmäßige Maßnahmen getroffen werden. Um eine solche Klassifikation vorzunehmen, können ein Modell einer bestimmten, bekannten Anomalie bildende Parametersätze 25 im Speicher 23 bereitgehalten sein, die von der Verwaltungseinheit 16 nach der Feststellung, dass eine Anomalie (von zunächst unbekannter Art) vorliegt, anstelle des Parametersatzes 24 in das Netz 15 geladen und zum Verarbeiten der Messdaten eingesetzt werden. Die Wirkungsweise ist die gleiche wie zuvor: da das Netz durch den aktuell geladenen Parametersatz 25 nun eingerichtet ist, Messdaten, die die diesem Parametersatz 25 zugeordnete Anomalie zeigen, nach dem Komprimieren originalgetreu wiederherzustellen, kann davon ausgegangen werden, dass wenn die Abweichung zwischen ursprünglichen und mit dem Parametersatz 26 wiederhergestellten Messdaten unter einem geeignet gewählten Schwellenwert liegt, die dem Parametersatz 25 zugeordnete Anomalie vorliegt.

Wenn also beispielsweise beim Auswerten von Bildern der Kamera 9 mit dem Parametersatz 24 festgestellt wird, dass eine Anomalie vorliegt, dann kann der Grund dafür beispielsweise ein Tier, Unkraut oder Müll sein, die sich im Blickfeld der Kamera 9 befinden. Für jeden dieser Fälle ist ein Parametersatz 25 im Speicher 23 vorhanden. Die Verwaltungseinheit 16 konfiguriert also in einem solchen Fall das Netz 15 mit Hilfe eines der Parametersätze 25 um, um einen dieser Fälle, zweckmäßigerweise den wahrscheinlichsten, zu überprüfen. Wenn dabei eine ausreichend geringe Abweichung zwischen den ursprünglichen und den wiederhergestellten Messdaten festgestellt wird, dann ist die Anomalie erfolgreich klassifiziert, und es kann eine passende Maßnahme getroffen werden, im Fall eines Tiers z.B. Heranfahren mit verringertem Tempo, um das Tier zu vertreiben, und anschließendes Weiterfahren, im Falle von Unkraut Ignorieren, im Falle von Müll Anhalten, damit der Fahrer ihn Inspizieren und ggf. beseitigen kann. Ist die Abweichung hingegen groß, dann gehört die Anomalie offenbar nicht zu der Klasse, die das Netz 15 in der aktuellen Konfiguration erkennt, und die Verwaltungseinheit 16 rekonfiguriert das Netz 15 mit einem der restlichen Parametersätze 25 aus dem Speicher 23, bis entweder einer von diesen eine hinreichend kleine Abweichung zwischen den ursprünglichen und den wiederhergestellten Messdaten ergibt oder alle Parametersätze 25 durchprobiert sind und festgestellt werden muss, dass die vorliegende Anomalie zu keiner der bekannten Klassen gehört.

Alle Parametersätze 24, 25 können durch Trainieren des Netzes 15 erstellt werden, d.h. durch Eingeben von Testdaten in das Netz 15 und Variieren der Parameter, um die Abweichung zwischen den ursprünglichen Testdaten und den vom Netz 15 nach Kompression wiederhergestellten Daten zu minimieren. Zum Optimieren eines Parametersatzes 25 werden Testdaten benötigt, die die diesem Parametersatz 25 zugeordnete Anomalie aufweisen. Es ist also zumindest zum Auswählen der Testdaten im Allgemeinen menschliche Aufmerksamkeit erforderlich, deswegen ist es zweckmäßig, wenn die Parametersätze 25 vom Hersteller des Mähdreschers erstellt werden und zu dessen Auslieferungsausstattung gehören. Der Parametersatz 24 hingegen kann anhand von unselektierten Daten optimiert werden, da davon ausgegangen werden kann, dass Anomalien, auch wenn welche in diesen Daten enthalten sind, zu selten und zu divers sind, als dass das Netz 15 ein originalgetreues Wiederherstellen ihrer Daten mit einer vergleichbaren Genauigkeit erlernen könnte wie das Wiederherstellen von Daten eines Normalzustands. Dies erlaubt es, den Parametersatz 24 erst im Feldeinsatz des Mähdreschers 1 beim Anwender zu erstellen, oder einen vom Hersteller mitgelieferten Datensatz anhand von beim Einsatz durch den Anwender gewonnenen Daten fortlaufend weiter zu optimieren, ohne dass dafür eine Aktivität von Seiten des Anwenders nötig wäre.

### Bezugszeichen

- 1: Mähdrescher
- 2: Erntevorsatz
- 3: Messerleiste
- 4: Förderschnecke
- 5: Dreschwerk
- 6: Hordenschüttler
- 7: Gebläse
- 8: Satellitennavigationssystem
- 9: Kamera
- 10: Kamera
- 11: Kamera
- 12: Schrägförderer
- 13: Steuerungssystem
- 14: Datenbus
- 15: neuronales Netzwerk
- 16: Verwaltungseinheit
- 17: Benutzerschnittstelle
- 18: Neuron
- 19: Eingangsschicht
- 20: Zwischenschicht
- 21: Ausgangsschicht
- 22: Metrik
- 23: Speicher
- 24: Parametersatz
- 25: Parametersatz
- 26: Encoder
- 27: Decoder

## Patentansprüche

1. Steuerungssystem (13) für eine landwirtschaftliche Arbeitsmaschine (1) mit wenigstens einem Dateneingang (14) zum Empfangen eines für einen aktuellen Betriebszustand der Arbeitsmaschine (1) charakteristischen aktuellen Satzes von Betriebsgrößen der Arbeitsmaschine (1) und einem Steuerausgang (14) zum Ausgeben eines die Arbeit der Arbeitsmaschine (1) beeinflussenden Steuerbefehls, **dadurch gekennzeichnet, dass** das Steuerungssystem (13) über ein anhand von Trainingsdaten erlerntes Modell (24) des Normalzustandes der Arbeitsmaschine verfügt und eingerichtet ist, einen aktuellen anomalen Zustand der Arbeitsmaschine (1) durch Abgleichen des aktuellen Satzes von Betriebsgrößen mit dem Modell (24) zu erkennen und darauf durch Ausgeben des Steuerbefehls zu reagieren.

2. Steuerungssystem nach Anspruch 1, **dadurch gekennzeichnet, dass** das Steuerungssystem (13) eingerichtet ist, mittels einer Metrik (22) eine Abweichung zwischen zwei Sätzen von Betriebsgrößen zu bewerten, und einen Encoder (26) zum Konvertieren eines aktuellen Satzes in eine komprimierte Darstellung und einen Decoder (27) zum Dekomprimieren der komprimierten Darstellung in einen wiederhergestellten Satz umfasst, die jeweils lernfähig sind, um die Abweichung zwischen jedem aktuellen Satz und dem daraus erhaltenen wiederhergestellten Satz zu minimieren.

3. Steuerungssystem nach Anspruch 2, **dadurch gekennzeichnet, dass** der Encoder (26) und Decoder (27) als ein neuronales Netzwerk (15) aufgebaut sind.

4. Steuerungssystem nach einem der vorhergehenden Ansprüche, **dadurch gekennzeichnet, dass** das Modell (24) anhand einer vorgegeben Menge von Trainingsdaten offline trainiert ist.

5. Steuerungssystem nach einem der vorhergehenden Ansprüche, **dadurch gekennzeichnet, dass** das Modell (24) anhand von im Betrieb der Arbeitsmaschine gewonnenen Sätzen von Betriebsgrößen trainiert ist.

6. Steuerungssystem nach Anspruch 4 oder 5, **dadurch gekennzeichnet, dass** das Modell unbeaufsichtigt trainiert ist.

7. Steuerungssystem nach einem der vorhergehenden Ansprüche, **dadurch gekennzeichnet, dass** der aktuelle Satz von Betriebsgrößen wenigstens eines der folgenden umfasst:
- ein von einer Kamera (9) der Arbeitsmaschine (1) aufgenommenes Bild der Umgebung der Arbeitsmaschine,
- ein von einer Kamera (10, 11) der Arbeitsmaschine (1) aufgenommenes Bild eines Teils der Arbeitsmaschine (1), insbesondere eines in der Arbeitsmaschine (1) verarbeiteten Gutstroms,
- eine Aufzeichnung eines Betriebsgeräuschs der Arbeitsmaschine,
- eine geographische Position der Arbeitsmaschine,
- eine Position eines Stellgliedes der Arbeitsmaschine,
- eine Geschwindigkeit eines Motors oder eines von dem Motor angetriebenen Elements der Arbeitsmaschine,
- eine Ableitung, insbesondere nach der Zeit, einer der vorgenannten Betriebsgrößen.

8. Steuerungssystem nach einem der vorhergehenden Ansprüche, **dadurch gekennzeichnet, dass** der ausgegebene Steuerbefehl ein Haltebefehl oder ein auf eine Abstellung des anomalen Zustands abzielender Befehl ist.

9. Landwirtschaftliche Arbeitsmaschine (1) mit einem Steuerungssystem (13) nach einem der vorhergehenden Ansprüche.

10. Computerprogramm-Produkt umfassend Befehle, die bei der Ausführung durch einen Computer diesen befähigen, als Steuerungssystem (13) nach einem der Ansprüche 1 bis 8 zu arbeiten.
